# EUROPÄISCHE PATENTANMELDUNG

(11) **EP 4 851 934 A1**
(43) Veröffentlichungstag der Anmeldung: **09.12.2026**
(21) Anmeldenummer: 26173914.8
(22) Anmeldetag: 22.04.2026
(51) Int. Cl.: G06T 12/10

(54) **COMPUTERIMPLEMENTIERTES VERFAHREN ZUR ERMITTLUNG EINER KORREKTURINFORMATION FÜR EINEN VORLÄUFIGEN COMPUTERTOMOGRAPHIEDATENSATZ, AUSWERTUNGSEINRICHTUNG, RÖNTGENEINRICHTUNG, COMPUTERPROGRAMM UND ELEKTRONISCH LESBARER DATENTRÄGER**

(30) Priorität: 04.06.2025 DE 102025121822
(71) Anmelder: Siemens Healthineers AG, 91301 Forchheim (DE)
(72) Erfinder: Maaß, Nicole, 91052 Erlangen (DE)
(74) Vertreter: Siemens Healthineers Patent Attorneys

(57) **Zusammenfassung**

Die Erfindung betrifft ein computerimplementiertes Verfahren zur Ermittlung einer Korrekturinformation (40) für einen vorläufigen Computertomographiedatensatz (36), der aus einer Mehrzahl von Projektionsbildern (34) rekonstruiert ist, die in unterschiedlichen, durch Geometrieparameter beschriebenen Aufnahmegeometrien aufgenommen wurden, wobei eine trainierte Auswertungsfunktion (38) auf einen Eingangsdatensatz (37), der wenigstens einen Teil der Bilddaten des vorläufigen Computertomographiedatensatzes (46) umfasst, angewendet wird, um einen eine Korrekturinformation (40) umfassenden Ausgangsdatensatz (39) zu ermitteln, wobei die Korrekturinformation (40) für wenigstens einen Geometrieparameter eine Abweichung von einem zur Rekonstruktion des vorläufigen Computertomographiedatensatzes (36) verwendeten Wert beschreibt.

## Beschreibung

Die Erfindung betrifft ein computerimplementiertes Verfahren zur Ermittlung einer Korrekturinformation für einen vorläufigen Computertomographiedatensatz, der aus einer Mehrzahl von Projektionsbildern rekonstruiert ist, die in unterschiedlichen, durch Geometrieparameter beschriebenen Aufnahmegeometrien aufgenommen wurden. Daneben betrifft die Erfindung eine Auswertungseinrichtung, eine Röntgeneinrichtung, ein Computerprogramm und einen elektronisch lesbaren Datenträger.

In computertomographischen Verfahren ist es bekannt, aus niedrigdimensionalen, insbesondere zweidimensionalen, Projektionsbildern eines Untersuchungsobjekts, die in unterschiedlichen Aufnahmegeometrien aufgenommen worden, höherdimensionale Computertomographiedatensätze (Bilddatensätze) zu rekonstruieren. Insbesondere werden hierbei dreidimensionale Voxelvolumendaten als Bilddaten des Computertomographiedatensatzes ermittelt. Wesentlich für eine möglichst akkurate dreidimensionale Rekonstruktion ist die möglichst genaue Kenntnis der geometrischen Verhältnisse bei der Erfassung der Projektionsbilder, also der Aufnahmegeometrien. Diese geometrischen Verhältnisse, insbesondere also die Aufnahmegeometrien, werden üblicherweise durch Geometrieparameter beschrieben, beispielsweise durch zwölf Parameter einer Projektionsmatrix pro Projektionsbild oder aber einfacher interpretierbare Größen.

Beispielsweise befinden sich der Röntgenstrahler und der Röntgendetektor zum Erfassen der Projektionsbilder auf gegenüberliegenden Seiten des aufzunehmenden Objekts (Untersuchungsobjekt) in einem Abstand in der Größenordnung von ein bis zwei Metern, wobei die Szene in der Projektion um den Faktor zwei vergrößert wird. Das sind bei medizinischen Anwendungen typische Werte. In anderen, technischen Anwendungen von Computertomographiebildgebung sind Abweichungen von diesen typischen Setups nicht selten, so dass Vergrößerungen teilweise auch den Faktor 200 überschreiten. Eine sinnvolle Voxelgröße für den zu rekonstruierende Computertomographiedatensatz ergibt sich, indem die verwendete Pixelgröße des Röntgendetektors durch die Vergrößerung der Aufnahmeanordnung dividiert wird. Dadurch ergibt sich, dass typischerweise Voxelgrößen von 0,2 mm bis 0,0001 mm in realen Anwendungen zum Einsatz kommen.

Eine häufig auftretende Abweichung der realen geometrischen Verhältnisse während der Aufnahme eines Projektionsbildes von den dafür angenommenen geometrischen Verhältnissen kann zu Artefakten in dem daraus rekonstruierten Computertomographiedatensatz führen. Als Faustregel ist beispielsweise bekannt, dass dann, wenn die Abweichung ein Zehntel der Voxelgröße des zu berechnenden Volumens überschreit, geometrische Artefakte im Volumen sichtbar werden.

Um das Untersuchungsobjekt aus verschiedenen Perspektiven, also in verschiedenen Aufnahmegeometrien, zu erfassen, müssen Teile der Aufnahmeanordnung beweglich sein. Getrieben durch Fortschritte bei verschiedenen Technologien werden immer kleinere Detektorpixel und Röntgenfokuspunkte ermöglich, was die Möglichkeit und das Bedürfnis eröffnet, immer mehr und immer kleinere Voxel zu rekonstruieren. Um dies möglichst artefaktfrei zu erreichen, muss mit immer höheren Kosten eine hinreichend genaue mechanische Stabilisierung der Aufnahmeanordnung erfolgen.

Ein erster Ansatz, um aufgrund abweichender Geometrieparameter auftretende Artefakte in Computertomographiedatensätzen möglichst weitgehend zu vermeiden, ist es, hochgenaue Mechanik und Manipulatoren zu verwenden und diese, beispielsweise bei Inbetriebnahme der Röntgeneinrichtung, genau zu vermessen. Um Einflüsse der Temperatur zu vermeiden, wurde auch vorgeschlagen, eine Temperaturstabilisierung zu verwenden. Dieser Ansatz hat hohe Investitions- und Wartungskosten zur Folge. Vorgeschlagen wurde auch, die Anzahl der beweglichen Teile zu reduzieren und die Auslegung der Röntgeneinrichtung auf die Genauigkeit der Aufnahmeanordnung zu optimieren. Damit wird die Flexibilität für den Benutzer allerdings beschränkt und andere Optimierungskriterien bei der Auslegung müssen untergeordnet werden.

Auch wurde vorgeschlagen, beispielsweise bei bereits bestehenden Röntgeneinrichtungen, die Messzeit zu verlängern oder zu verkürzen, um die Einflüsse auf geometrische Genauigkeiten zu optimieren. Bei einer Verkürzung der Messzeit ist beispielsweise die Veränderung von Form und Position des Röntgenbrennfleckes im Verlauf der Datenaufnahme geringer. Bei einer verlängerten Messzeit können die mechanischen Komponenten nach einer Bewegung erst ausschwingen, so dass die Datenerfassung unter kontrollierteren Bedingungen erfolgt. Die mechanische Dejustage kann in eine langfristige Komponente und eine kurzfristige Komponente aufgeteilt werden. Um den Anteil der langfristigen Komponente zu reduzieren kann vor jeder Nutz-Messung eine Einmessung der Geometrie erfolgen (umgangssprachlich oft nicht ganz technisch korrekt "Kalibriermessung" genannt). Dabei wird ein spezielles Messobjekt (Phantom) zum Einmessen der Röntgeneinrichtung mittels der Aufnahmeanordnung erfasst. Anschließend wird aus dieser Messung die geometrische Justage der Röntgeneinrichtung für die darauffolgende Messung verbessert. Diese Methoden können in der Regel nur langfristige Fehlerkomponenten für eine bestimmte Aufnahmegeometrie bzw. Position der Aufnahmeanordnung reduzieren und haben hohe Kosten für spezielle Einmessphantome, welche oft in mehreren Größen vorgehalten werden müssen und vor ihrer Benutzung hochgenau taktil vermessen werden, zur Folge. Eine Einmessung erfordert außerdem eine hohe Personalkompetenz, hat einen hohen Zeitaufwand und wie beschrieben nur ein beschränktes Potential zur Bildqualitätsverbesserung.

Im Stand der Technik sind zudem verschiedene algorithmische Ansätze vorgeschlagen worden, welche sich jedoch in der Praxis nicht durchsetzen konnten. Die Gründe dafür sind vielfältig. Viele algorithmische Ansätze optimieren die Justage über ein Optimierungsverfahren, welches die Kostenfunktion direkt im Voxelvolumen definiert und somit für eine einmalige Auswertung der Kostenfunktion eine komplette Computertomographie-Rekonstruktion benötigt. Diese sind in der Regel zu aufwändig, weil über eintausend Auswertungen der Kostenfunktion üblich sind.

DE 10 2013 200 329 A1 betrifft ein Verfahren und eine Vorrichtung zur Dejustagekorrektur für Bildgebungsverfahren. Dort werden mittels eines einander zugeordneten Quelle-Detektor-Paars entlang einer von dem Paar durchlaufenen Trajektorie eine Vielzahl von Aufnahmen eines Objektes gemacht. Es wird eine im 3D Radonraum dieser Aufnahmen bestehende Redundanzen verwendende Kostenfunktion gebildet, wobei zwei Punkte auf der von der Quelle durchlaufenen Trajektorie ausgewählt werden, eine Ebene verwendet wird, die eine durch die beiden Punkte definierte Gerade enthält, die Schnitte zwischen der Ebene und der Detektoroberfläche für die durch die Punkte gegebenen beiden Quellenpositionen bestimmt werden, und durch die Schnitte erhaltene Parameter für die Bildung der Kostenfunktion verwendet werden. Mittels Suche nach einem Extremum der Kostenfunktion werden Korrekturinformationen für einen für die Aufnahmen relevanten Geometrieparameter ermittelt wird. Diese Korrektur wird für eine Bildrekonstruktion aus der Vielzahl der Aufnahmen verwendet wird. Damit wird im Gegensatz zu vergleichbaren Methoden eine Parameteroptimierung auf der Basis von Trajektorien ohne redundante Strahlen erlaubt.

Mit anderen Worten wird mit algorithmischen Methoden die vermutete Geometrie verbessert und somit die tatsächliche Justage der Aufnahmeanordnung mittels eines Optimierungsalgorithmus direkt basierend auf den Projektionsbildern und somit ohne Volumenrekonstruktion berechnet. Das ermöglicht ein wesentlich günstigeres Design der mechanischen Komponenten der Aufnahmevorrichtung, ohne auf Genauigkeit verzichten zu müssen.

Allerdings hat sich gezeigt, dass, um ein geeignetes Optimum zu finden, eine Vorgabe von Justageparametern für den Ermittlungsvorgang die Ergebnisse in ihrer Qualität deutlich verbessert. Derartige Justageparameter beschreiben üblicherweise maximal erwartbare Abweichungen für jeden der Geometrieparameter. Diese Parametrisierung der automatischen Justageverbesserung erfordert allerdings Fachkenntnisse. Beispielsweise kann es sich bei den Justageparametern für die Justageverbesserung je nach Art der Messung um fünf bis fünfzehn vorzeichenlose Skalare handeln. Es ist wichtig, diese Werte sinnvoll zu konfigurieren, weil die Justagekorrektur instabil wird (d.h. lange Laufzeit und unzuverlässiges Ergebnis), wenn zu viele Justageparameter zu hoch gesetzt sind, also die Abweichung nicht hinreichend vorverortet ist. Werden die Justageparameter zu gering gesetzt, bleibt die Justageverbesserung wirkungslos.

Der Erfindung liegt daher die Aufgabe zugrunde, eine Möglichkeit zur robusten und verlässlichen Ermittlung von Korrekturinformationen hinsichtlich geometrischer Abweichungen in der Computertomographie anzugeben, welche insbesondere eine Abhängigkeit vom Erfahrungsgrad der Benutzer reduziert.

Zur Lösung dieser Aufgabe sind erfindungsgemäß ein computerimplementiertes Verfahren, eine Auswertungseinrichtung, eine Röntgeneinrichtung, ein Computerprogramm und ein elektronisch lesbarer Datenträger gemäß den nebengeordneten Patentansprüchen vorgesehen. Vorteilhafte Weiterbildungen ergeben sich aus den Unteransprüchen.

Bei einem Verfahren der eingangs genannten Art ist erfindungsgemäß vorgesehen, dass eine trainierte Auswertungsfunktion auf einen Eingangsdatensatz, der wenigstens einen Teil der Bilddaten des vorläufigen Computertomographiedatensatzes umfasst, angewendet wird, um einen eine Korrekturinformation umfassenden Ausgangsdatensatz zu ermitteln, wobei die Korrekturinformation für wenigstens einen Geometrieparameter eine Abweichung von einem zur Rekonstruktion des vorläufigen Computertomographiedatensatzes verwendeten Wert beschreibt.

Es wurde erkannt, dass mit zunehmender Erfahrung Benutzer von Justageverbesserungsverfahren, beispielsweise basierend auf dem in DE 10 2013 200 329 A1 beschriebenen Vorgehen, eine verbesserte Wahl von Justageparametern in Abhängigkeit des artefaktebehafteten Bildeindrucks des vorläufigen Computertomographiedatensatzes treffen können. Das bedeutet, es besteht ein Zusammenhang zwischen den Inhalten des vorläufigen Computertomographiedatensatzes, konkret den auftretenden Artefakten, und den Geometrieparametern, in denen die Abweichung von den angenommenen Aufnahmegeometrien zur Rekonstruktion des vorläufigen Computertomographiedatensatzes vorliegt. Es wird daher vorgeschlagen, diesem Zusammenhang durch Maschinenlernen zu erfassen und eine entsprechend trainierte Auswertungsfunktion bereitzustellen, die auf Basis der vorläufigen Rekonstruktion, also des vorläufigen Computertomographiedatensatzes, eine Aussage darüber herleitet, in welchem Geometrieparameter welche Abweichung gegenüber dem für die vorläufige Rekonstruktion angenommenen Geometrieparametersatz, beispielsweise einem" best guess", vorliegt.

Im Allgemeinen bildet eine trainierte Funktion kognitive Funktionen ab, die Menschen mit anderen menschlichen Gehirnen assoziieren. Durch Training basierend auf Trainingsdaten (Maschinenlernen) ist die trainierte Funktion in der Lage, sich an neue Umstände anzupassen und Muster zu detektieren und zu extrapolieren. Ein anderer Ausdruck für "trainierte Funktion" ist "trainiertes Maschinenlernmodell".

Allgemein gesagt können Parameter einer trainierten Funktion durch Training angepasst werden. Insbesondere können überwachtes Lernen, halbüberwachtes Lernen, nicht überwachtes Lernen, Reinforcement Learning und/oder aktives Lernen verwendet werden. Darüber hinaus kann auch Repräsentationslernen (auch als "feature learning" bekannt) eingesetzt werden. Die Parameter der trainierten Funktion können insbesondere iterativ durch mehrere Trainingsschritte angepasst werden. Insbesondere kann bei dem Training eine bestimmte Kostenfunktion minimiert werden. Beispielsweise kann beim Training eines neuronalen Netzes der Backpropagation-Algorithmus eingesetzt werden.

Eine trainierte Funktion kann beispielsweise ein neuronales Netz, eine Support Vector Machine (SVM), einen Entscheidungsbaum und/oder ein Bayes-Netzwerk umfassen und/oder die trainierte Funktion kann auf k-means-Clustering, Q-Learning, genetischen Algorithmen und/oder Zuordnungsregeln basieren. Insbesondere kann ein neuronales Netzwerk ein tiefes neuronales Netzwerk, ein Convolutional Neural Network (CNN) oder ein tiefes CNN sein. Darüber hinaus kann das neuronale Netzwerk ein Adversarial Network, ein tiefes Adversarial Network und/oder ein Generative Adversarial Network (GAN) sein.

Bevorzugt kann die trainierte Auswertungsfunktion ein Convolutional Neural Network (CNN) sein. Ein CNN ist ein neuronales Netz, dass eine Faltungsoperation anstatt allgemeiner Matrixmultiplikation in wenigstens einer seiner Schichten, der sogenannten Faltungsschicht, verwendet. Insbesondere kann eine Faltungsschicht ein Skalarprodukt eines oder mehrerer Faltungskerne mit den eingehenden Daten/Bildern der Faltungsschicht durchführen, wobei die Einträge des einen oder der mehreren Faltungskerne die Parameter oder Gewichte sind, die durch Training angepasst werden. Insbesondere können das innere Frobenius-Produkt und die ReLu-Aktivierungsfunktion verwendet werden. Ein CNN kann zusätzliche Schichten, beispielsweise Pooling-Schichten, vollständig verbundene Schichten und Normalisierungsschichten umfassen.

Durch CNN können Eingangsbilddaten auf äußerst effiziente Weise verarbeitet werden, da eine Faltungsoperation basierend auf unterschiedlichen Kernen verschiedenste Bildmerkmale extrahieren kann, sodass durch Anpassung der Gewichte der Faltungskern die relevanten Bildmerkmale während des Trainings aufgefunden werden können. Darüber hinaus müssen basierend auf dem Sharing der Gewichte in den Faltungsschicht Kernen weniger Parameter trainiert werden, sodass ein Overfitting in der Trainingsphase vermieden wird und schnelleres Training oder eine größere Anzahl an Schichten in dem CNN erlaubt werden, sodass die Leistungsfähigkeit des Netzwerks erhöht wird.

Vorzugsweise kann der Eingangsdatensatz auch eine Ortsinformation umfassen, die eine Positionszuordnung aller Voxel, deren Bilddaten in die trainierte Auswertungsfunktion eingehen, erlaubt. Es kann also ein zusätzlicher Eingangskanal der trainierten Auswertungsfunktion vorgesehen werden, der die Ortszuordnung betrifft, insbesondere dann, wenn nicht der gesamte vorläufige Computertomographiedatensatz mit seiner ggf. vorgegebenen Ordnung herangezogen wird. Die Ortszuordnung hat sich als wesentlich erwiesen, da die Lage der Artefakte und sonstigen Bildeffekte wesentliche Hinweise auf die ursächliche(n) Abweichung(en) gibt.

Als Grundlage des erfindungsgemäßen Verfahrens werden also, wie bekannt, Projektionsbilder unter Verwendung verschiedener Aufnahmegeometrien, beispielsweise entlang einer Aufnahmetrajektorie, aufgenommen. Unter der bestmöglichen Annahme für die Geometrieparameter, die die Aufnahmegeometrien beschreiben, erfolgt eine erste, vorläufige Rekonstruktion des dreidimensionalen Computertomographiedatensatzes aus den zweidimensionalen Projektionsbildern. Liegen in dem vorläufigen Computertomographiedatensatz keinerlei Artefakte vor, kann vorgesehen sein, den vorläufigen Computertomographiedatensatzes als endgültigen Computertomographiedatensatz zu bestätigen. Liegen jedoch Artefakte vor bzw. werden Artefakte vermutet, wird die trainierte Auswertungsfunktion auf einen Eingangsdatensatz angewendet, der zumindest Teile des vorläufigen Computertomographiedatensatzes enthält. Die trainierte Auswertungsfunktion analysiert die vorliegenden Artefakte in dem vorläufigen Computertomographiebilddatensatz und zieht aufgrund der gelernten Korrelationen Schlüsse, durch welche Abweichung in welchem Geometrieparameter diese verursacht sein könnten. Ist beispielsweise in einem einfachen Beispiel der Röntgendetektors gegenüber der angenommenen Position bei einer Kreisbahn als Aufnahmetrajektorie um die Rotationsachse verkippt, können bestimmte Artefakte, beispielsweise sogenannte Doppelkanten, mittig und am Rand des Rekonstruktionsbereichs (Messfelds) auftreten. Bezieht sich die Verkippung auf eine andere Achse, können die Artefakte an anderen Stellen auftreten. Diese und die unüberschaubare Vielzahl weiterer Zusammenhänge werden durch die trainierte Auswertungsfunktion abgebildet und genutzt, um als Ausgangsdaten Korrekturinformation bereitzustellen, die, insbesondere für alle Geometrieparameter, mögliche Abweichungen von den Werten der Geometrieparameter, die dem vorläufigen Computertomographiedatensatz zugrundeliegen, beschreiben.

Durch das Lernen und das Nutzen der vielfältigen Zusammenhänge zwischen in dem vorläufigen Computertomographiedatensatz auftretenden Artefakten und Abweichungen in den Geometrieparametern wird ein effizienter, schneller, zuverlässiger und insbesondere auch für komplexere Messvorgänge, insbesondere Aufnahmetrajektorien, einsetzbarer Ansatz zur Korrektur von Justagefehlern bereitgestellt, der eine hochqualitative Korrektur ermöglicht. Insbesondere sieht das erfindungsgemäße Verfahren mithin vor, dass unter Verwendung der Korrekturinformation ein korrigierter Computertomographiedatensatz ermittelt wird. Dabei besteht keine Abhängigkeit von der Erfahrung des Benutzers, sodass auch geringer qualifiziertes Personal hervorragende Ergebnisse erzielen kann. Insbesondere kann auch eine Vielzahl von selbst durch Erfahrung nicht menschlich erschließbarer Zusammenhänge durch die trainierte Auswertungsfunktion abgebildet werden.

In zweckmäßiger Weiterbildung der vorliegenden Erfindung kann vorgesehen sein, dass die Korrekturinformation wenigstens umfassend eine maximale Abweichung für den wenigstens einen Geometrieparameter ermittelt wird. Auf diese Weise beschreibt die Korrekturinformation, in welchem wenigstens einen Geometrieparameter mit größter Wahrscheinlichkeit das Problem, also die Abweichung, verortet ist. Zudem kann die maximale Abweichung der Korrekturinformation dann unmittelbar Eingang als Justageparameter in eine Justageverbesserung finden.

Besonders bevorzugt kann in diesem Kontext vorgesehen sein, dass wenigstens die maximale Abweichung als Justageparameter für einen Ermittlungsvorgang zur Ermittlung eines anzuwendenden Korrekturwerts für wenigstens einen des wenigstens einen Geometrieparameters verwendet wird, wonach unter Anwendung der Korrekturwerte ein korrigierter Computertomographiedatensatz rekonstruiert wird. Mithin entfällt bei einem solchen Ermittlungsvorgang, oft auch als Justageverbesserung bezeichnet, die Notwendigkeit einer benutzerseitigen Wahl der Justageparameter, welche stattdessen durch die trainierte Auswertungsfunktion vorgenommen werden kann, die Robustheit, Verlässlichkeit, Genauigkeit und Qualität deutlich erhöhend. Beispielsweise kann in dem Ermittlungsvorgang eine Optimierung auf Grundlage einer Kostenfunktion erfolgen, die im 3D-Radonraum bestehende Redundanzen verwendet. Es kann mithin ein Ermittlungsvorgang auf der Grundlage des in der bereits genannten DE 10 2013 200 329 A1 Beschriebenen verwendet werden. Wie dort erläutert, wird als der dreidimensionale Radonraum die Menge aller Ebenenintegrale durch die räumliche Verteilung des Objektschwächungskoeffizienten bezeichnet. Ein Wert im 3D Radonraum entspricht also dem Integral des Objektschwächungskoeffizienten auf einer Ebene, wobei eine Ebene im Raum durch drei Parameter (λ, µ, s) oder (λ1 , λ2 , φ) definiert werden kann. Die vorliegende Erfindung erlaubt es also, ohnehin vorhandene Korrekturansätze mit Ermittlungsvorgängen nochmals deutlich zu verbessern und die Qualität und Verlässlichkeit der Korrektur zu erhöhen.

Eine besonders bevorzugte Weiterbildung der vorliegenden Erfindung sieht vor, dass zusätzlich zu der maximalen Abweichung auch eine minimale Abweichung für den wenigstens einen Geometrieparameter ermittelt wird. Auch minimale Abweichungen können mit der trainierten Auswertungsfunktion, insbesondere einem CNN, geschätzt werden, um die Justagekorrektur weiter zu verbessern. Die minimale Abweichung kann ebenso als Justageparameter in den Ermittlungsvorgang eingehen, um dessen Ergebnisse weiter zu verbessern. Möglich ist es jedoch mit besonderem Vorteil auch, dass zumindest bei Erfüllung einer Bestimmtheitsbedingung, die anzeigt, dass der Abstand zwischen der minimalen Abweichung und der maximalen Abweichung für wenigstens einen, insbesondere alle, des wenigstens einen Geometrieparameters einen Bestimmtheitsschwellwert unterschreitet, aus der maximalen Abweichung und der minimalen Abweichung ein anzuwendender Korrekturwert ermittelt und, insbesondere nach Bestätigung durch einen Benutzer, zur Rekonstruktion des oder eines korrigierten Computertomographiedatensatzes verwendet wird. Mit anderen Worten kann dann, wenn durch die trainierte Auswertungsfunktion bereits hinreichend genaue Ergebnisse erzielt werden, auf einen Ermittlungsvorgang verzichtet werden. Liegen also die maximale Abweichung und die minimale Abweichung, insbesondere für alle Geometrieparameter, nahe beieinander, beschrieben durch den Bestimmtheitsschwellwert, ist es möglich, aus diesen, beispielsweise durch Mittelwertbildung, bereits einen konkreten Korrekturwert abzuleiten, der dann eingesetzt werden kann, um den korrigierten Computertomographiebilddatensatz zu ermitteln. Denkbar ist es beispielsweise, einen Benutzer auf die eng beieinander liegenden minimalen und maximalen Abweichungen hinzuweisen und ihm die Möglichkeit zu geben, konkrete Korrekturwerte unmittelbar aus der Korrekturinformation zu bestimmen und den Ermittlungsvorgang zu überspringen.

Grundsätzlich kann vorgesehen sein, dass der Eingangsdatensatz den gesamten vorläufigen Computertomographiedatensatz umfasst. Jedoch ist es im Rahmen der vorliegenden Erfindung mit besonderem Vorteil auch möglich, die Effizienz zu erhöhen und die Anzahl an benötigten Eingangsdaten im Eingangsdatensatz zu reduzieren. Dies ist insbesondere bei großen bzw. hochaufgelösten vorläufigen Computertomographiedatensätzen zweckmäßig.

So sieht eine bevorzugte Weiterbildung der Erfindung vor, dass der Eingangsdatensatz wenigstens einen Teildatensatz des vorläufigen Computertomographiedatensatzes, nicht aber den gesamten Computertomographiedatensatz, umfasst, wobei dem Teildatensatz wenigstens eine Ortsangabe im Rekonstruktionsraum zugeordnet ist. Um mit reduzierten Ressourcen und erhöhter Effizienz arbeiten zu können, wird mit Teildatensätzen gearbeitet, die auch als Subvolumina oder Patches bezeichnet werden können. Die Position der Teildatensätze im Rekonstruktionsraum, also vollem Volumen, ist, wie bereits dargelegt wurde, insbesondere in Relation zu den anderen Teildatensätzen, relevant für das Ergebnis. Daher wird neben den Teildatensätzen auch eine Ortsangabe, beispielsweise als eine Ortskodierung, die die Position des Teildatensatzes im Rekonstruktionsraum beschreibt, als Teil des Eingangsdatensatzes verwendet. Es hat sich gezeigt, dass zur Effizienzsteigerung bei der Generierung des Eingangsdatensatzes wenige Teildatensätze ausreichend sein können, sodass Berechnungen auf den verbleibenden, nicht durch die Teildatensätze abgedeckten Bilddaten des vorläufigen Computertomographiedatensatzes vermieden werden können.

Vorzugsweise kann der wenigstens eine Teildatensatz aus dem vorläufigen Computertomographiedatensatz wenigstens teilweise derart ermittelt werden, dass
- wenigstens eine Kante in den Bilddaten enthalten ist, und/oder
- der Rekonstruktionsbereich und/oder Kanten in den Bilddaten im Rekonstruktionsbereich durch die mehreren Teildatensätze, insbesondere gleichmäßig, abgedeckt sind, und/oder
- Bereiche mit geringwertiger Bildinformation und/oder ohne Bildinformation, insbesondere Luft zeigende Bereiche, ausgeschlossen sind.

Artefakte äußern sich, wie sich gezeigt hat, besonders deutlich an Kanten, beispielsweise durch das Auftreten von Doppelkanten, deren verschmieren und dergleichen. Daher können Kanten, insbesondere ab einer vorbestimmten Kantenhöhe, zum besonderen Gegenstand der Auswertung durch die trainierte Auswertungsfunktion gemacht werden, indem entsprechende Bildbereiche des vorläufigen Computertomographiedatensatzes als Teildatensätze ausgewählt werden. Die wenigstens eine Kante ist dann in den Bilddaten beschrieben. Insbesondere werden hierbei Kanten bzw. sonstige, für Teildatensätze relevante Merkmale derart ausgewählt, dass der Bildinformation tragende Anteil des Rekonstruktionsraums bzw. vorläufigen Computertomographiedatensatzes möglichst gleichmäßig bzw. vollständig abgedeckt ist. Keine oder geringwertige, also insbesondere für eine Auswertung irrelevante, Bildinformation tragende Anteile, insbesondere solche, die Luft zeigen, können der Betrachtung entzogen werden, da sich hier Artefakte meist nicht bzw. nicht in relevanter Art äußern. Bei der Analyse des vorläufigen Computertomographiebilddatensatzes im Hinblick auf die Definition von Teildatensätzen kann auch Hintergrundinformation, beispielsweise über das Untersuchungsobjekt und/oder Aufnahmeparameter, mit eingehen.

Die Zahl und Größe der (allgemein bevorzugt nicht überlappenden) Teildatensätze kann dabei stark von dem Bildinhalt, also dem aufgenommenen Objekt, abhängig sein. Beispielsweise kann bei einer größeren Zahl von Kanten eine größere Anzahl kleinerer Teildatensätze erforderlich sein, bei viel abgebildeter Luft können große Anteile des vorläufigen Computertomographiesatzes als Eingangsdaten weggelassen werden und/oder bei wenig Kanten können wenige repräsentative Teildatensätze ausreichend sein. Beispielsweise sind Teildatensätze denkbar, die 2 bis 90 %, insbesondere aber 3 bis 15%, des vorläufigen Computertomographiedatensatzes enthalten und/oder Kantenlängen im Bereich von 10 bis 2300 Voxeln aufweisen.

In einer zweckmäßigen Ausgestaltung kann vorgesehen sein, dass die Teildatensätze durch Anwendung einer, insbesondere trainierten, Analysefunktion auf den vorläufigen Computertomographiedatensatz definiert werden. Beispielsweise kann die Analysefunktion Luft zeigende Bereiche erkennen und ausschließen und/oder Kanten, insbesondere ab einer vorbestimmten Stärke/Kantenhöhe und/oder Länge, detektieren sowie die Kanten zeigende Bildanteile identifizieren. Insbesondere können auch korrelierte Kanten wie Mehrfachkanten, insbesondere Doppelkanten, detektiert und gemeinsam einem Teildatensatz zugeordnet werden. Auch eine manuelle Definition der Teildatensätze ist möglich, beispielsweise, wenn ein Benutzer auf aufgetretene Artefakte wie Doppelkanten analysieren lassen möchte.

Zweckmäßigerweise kann für wenigstens einen des wenigstens einen Teildatensatzes dessen räumliche Auflösung im Vergleich zu dem vorläufigen Computertomographiedatensatz reduziert werden. Anders gesagt können die Teildatensätze zumindest teilweise eine geringere Ortsauflösung aufweisen, was weitere Möglichkeiten zur effizienteren Berechnung und/oder Reduzierung der bereitzustellenden Berechnungsressourcen bietet.

Das Training der trainierten Auswertungsfunktion kann auf verschiedenste Art und Weise auf der Grundlage von Fällen erfolgen, in denen die tatsächlich vorliegende geometrische Abweichung möglichst genau bekannt ist, beispielsweise anhand von bekannten Fällen und/oder Simulationen. In einer besonders vorteilhaften Ausgestaltung kann vorgesehen sein, dass zur Bereitstellung der trainierten Auswertungsfunktion
- wenigstens ein Satz von Vorgabe-Projektionsbildern mit zugehörigen, zumindest im Wesentlichen korrekten Vorgabe-Geometrieparametern bereitgestellt wird,
- zur Bildung von Trainingsdatensätzen
   * wenigstens ein Vorgabe-Geometrieparameter zur Definition einer eine Grundwahrheit bildenden Abweichung variiert wird, und
   * zur Ermittlung eines Trainings-Eingangsdatensatzes ein Trainings-Computertomographiedatensatz aus den Vorgabe-Projektionsbildern unter Nutzung des variierten Vorgabe-Geometrieparametersatzes rekonstruiert wird,
- die Auswertungsfunktion mit den Trainingsdatensätzen trainiert wird, und
- die trainierte Auswertungsfunktion bereitgestellt wird.

Auf diese Weise können auf einfache und schnelle Art Trainingsdaten für das Training der trainierten Auswertungsfunktion in nahezu beliebiger Anzahl generiert werden, wenn die Justage von Messungen mit bekannt guter Justage, also zumindest im Wesentlichen korrekten Geometrieparametern, künstlich verschlechtert wird, wobei hierbei bevorzugt unterschiedliche Arten der Variation zum Einsatz kommen können. Es wird also ausgegangen von Projektionsbildern, zu denen die Aufnahmegeometrien und mithin die Geometrieparameter äußerst genau bekannt sind. Der korrekte Geometrieparametersatz wird nun durch absichtliche, als Grundwahrheit bekannte Abweichungen variiert und es wird mit dem variierten Geometrieparametersatz aus den Vorgabe-Projektionsbildern ein künstlicher, vorläufiger Computertomographiedatensatz rekonstruiert, sodass ein vollständiger Trainingsdatensatz mit dem so rekonstruierten Trainings-Computertomographiedatensatz, der den Eingangsdatensatz definiert, und der Grundwahrheit, die die Korrekturinformation definiert, entsteht. Das Ergebnis sind hochqualitative Trainingsdatensätze. Mit den so erhaltenen Trainingsdatensätzen kann Auswertungsfunktion, beispielsweise wie oben bereits allgemein zu trainierten Funktionen beschrieben, trainiert werden und sodann entsprechend bereitgestellt werden.

Es sei darauf hingewiesen, dass im Rahmen der vorliegenden Erfindung ein Bereitstellungsverfahren zum Bereitstellen der trainierten Auswertungsfunktion ebenso denkbar ist, genauso wie eine zugehörige Bereitstellungseinrichtung, ein zugehöriges Bereitstellungscomputerprogramm und ein zugehöriger elektronisch lesbarer Bereitstellungsdatenträger.

Das erfindungsgemäße Verfahren zur Ermittlung der Korrekturinformation kann auch als ein Enabler zur Justageverbesserung, insbesondere bei Verwendung eines Ermittlungsvorgangs, für Arten von Aufnahmevorgängen dienen, die dieser Verbesserung bislang nicht zugänglich waren. Anders formuliert gibt es heute noch Messarten, bei denen die bekannten Ermittlungsvorgänge, insbesondere unter Nutzung von im 3D-Radonraum bestehenden Redundanzen, nicht immer bzw. nicht in hinreichender Qualität die gewünschten Ergebnisse liefern. Dies kann durch eine Vielzahl möglicher Abweichungseffekte gemeinsam mit schwieriger Auswahl der Justageparameter begründet sein. Dies hat entsprechende Arten von Aufnahmevorgängen in ihrer praktischen Anwendung bislang stark eingeschränkt. Durch die vorgeschlagene Vorgehensweise kann die Justagekorrektur bzw. Justageverbesserung für derartige, komplexere Aufnahmevorgänge eröffnet werden.

Beispielsweise kann eine konkrete Weiterbildung vorsehen, dass zur Aufnahme der Projektionsbilder des vorläufigen Computertomographiedatensatzes eine nicht-plane Aufnahmetrajektorie verwendet wird. Während für plane Aufnahmetrajektorien, mithin solche, bei denen die gesamte Aufnahmetrajektorie in einer einzigen Ebene liegt, Ermittlungsvorgänge der beschriebenen Art bislang mit guten Ergebnissen angewendet werden konnten, insbesondere gepaart mit erfahrenen Benutzern, stellen Arten von Aufnahmevorgängen, bei denen die Aufnahmetrajektorie nicht in einer einzigen Ebene liegt, also nicht-plane Aufnahmetrajektorien, Probleme dar, da durch den komplizierteren Ablauf eine Vielzahl unterschiedlicher Effekte auftreten kann, die selbst für erfahrene Benutzer nicht mehr überschaubar sind. Während Beispiele für plane Aufnahmetrajektorien beispielsweise Kreisbahnen und typische Tomografie-Aufnahmetrajektorien umfassen, sind von nicht-planen Aufnahmetrajektorien beispielsweise Spiraltrajektorien (Helix) oder auch völlig frei gewählte Trajektorien, beispielsweise zur Umgehung von langen Metalldurchleuchtungsstrecken, umfasst. Auch in diesen Bereichen ist nun eine Justageverbesserung auf verlässliche, robuste und hochqualitative Art möglich.

Neben dem erfindungsgemäßen Verfahren, das auch als Korrekturverfahren oder Auswertungsverfahren bezeichnet werden kann, betrifft die vorliegende Erfindung auch eine Auswertungseinrichtung zur Ermittlung einer Korrekturinformation für einen vorläufigen Computertomographiedatensatz, der aus einer Mehrzahl von Projektionsbildern rekonstruiert ist, die in unterschiedlichen, durch Geometrieparameter beschriebenen Aufnahmegeometrien aufgenommen wurden, aufweisend eine Auswertungseinheit zur Anwendung einer trainierten Auswertungsfunktion auf einen Eingangsdatensatz, der wenigstens einen Teil der Bilddaten des vorläufigen Computertomographiedatensatzes umfasst, um einen eine Korrekturinformation umfassenden Ausgangsdatensatz zu ermitteln, wobei die Korrekturinformation für wenigstens einen Geometrieparameter eine Abweichung von einem zur Rekonstruktion des vorläufigen Computertomographiedatensatzes verwendeten Wert beschreibt. Sämtliche Ausführungen bezüglich des erfindungsgemäßen Verfahrens lassen sich analog auf die erfindungsgemäße Auswertungseinrichtung übertragen und umgekehrt, sodass mit der Auswertungseinrichtung mithin ebenso die bereits genannten Vorteile erhalten werden können.

Die Auswertungseinrichtung weist wenigstens einen Prozessor und wenigstens ein Speichermittel auf. Durch Hardware und/oder Software können Funktionseinheiten gebildet werden, um Schritte des erfindungsgemäßen Verfahrens durchzuführen. Insbesondere kann die Auswertungseinrichtung auch eine Korrektureinheit zur Ermittlung eines korrigierten Computertomographiedatensatzes unter Verwendung der Korrekturinformation und/oder eine Zusammenstellungseinheit zur Zusammenstellung des Eingangsdatensatzes aufweisen. Zur Ermittlung eines korrigierten Computertomographiedatensatzes und optional auch zur Ermittlung des vorläufigen Computertomographiedatensatzes kann die Auswertungseinrichtung eine Rekonstruktionseinheit aufweisen. Selbstverständlich können auch weitere Funktionseinheiten vorgesehen sein, um Ausgestaltungen des Verfahrens umzusetzen, beispielsweise eine Trainingseinheit zum Bereitstellen der trainierten Auswertungsfunktion.

Die Erfindung betrifft auch eine Röntgeneinrichtung, aufweisend eine als eine erfindungsgemäße Auswertungseinrichtung ausgebildete oder eine solche umfassende Steuereinrichtung.

Die Auswertungseinrichtung kann Teil einer Steuereinrichtung einer Röntgeneinrichtung bzw. durch diese gebildet sein, wobei mit der Röntgeneinrichtung die Projektionsbilder aufgenommen werden oder wurden. Die Steuereinrichtung kann mithin auch eine Aufnahmeeinheit zur Steuerung des Aufnahmebetriebs aufweisen. Mittels einer Geometrieeinheit kann eine erste beste Abschätzung der Geometrieparameter bereitgestellt werden, die zur Rekonstruktion des vorläufigen Computertomographiedatensatzes verwendet werden kann. Bei der Röntgeneinrichtung kann es sich beispielsweise um eine Röntgeneinrichtung mit einem C-Bogen, an dem sich gegenüberliegend ein Röntgendetektor und ein Röntgenstrahler angeordnet sind, oder eine sonstige, interventionelle, beispielsweise Aufnahmegeometrien mittels Roboterarmen bereitstellende Röntgeneinrichtung sein. Gerade bei solchen Röntgeneinrichtungen kann es aufgrund der zwar meist vielseitigeren, aber auch aufgrund der Zugänglichkeit weniger gestützten Mechanik zu Abweichungen von erwarteten Geometrieparametern kommen. Mit einer Integration der Auswertungseinrichtung direkt an der Röntgeneinrichtung selbst kann vor Ort bereits, beispielsweise im Rahmen minimalinvasiver Eingriffe oder Produktuntersuchungen, eine Korrektur zielgerichtet und robust erfolgen. Vorteilhaft ist jedoch auch die Anwendung in der "klassischen" Computertomographie, bei der die Röntgeneinrichtung beispielsweise als Computertomographieeinrichtung ausgebildet sein kann, welche eine Gantry, innerhalb derer die Aufnahmeanordnung zumindest teilweise rotiert, umfasst. Hier ist die Anwendung insbesondere bei hochauflösenden Aufnahmevorgängen, beispielsweise mit sehr geringen Voxelgrößen, vorteilhaft.

Ein erfindungsgemäßes Computerprogramm ist direkt in ein Speichermittel einer Auswertungseinrichtung ladbar und weist Programmmittel derart auf, dass bei Ausführung des Computerprogramms auf der Auswertungseinrichtung diese veranlasst wird, die Schritte eines erfindungsgemäßen Verfahrens durchzuführen. Das Computerprogramm kann auf einem erfindungsgemäßen elektronisch lesbaren Datenträger gespeichert sein, welcher mithin darauf gespeicherte Steuerinformationen umfasst, die wenigstens ein erfindungsgemäßes Computerprogramm umfassen und derart ausgestaltet sind, dass bei Verwendung des Datenträgers in einer Auswertungseinrichtung diese zur Durchführung eines erfindungsgemäßen Verfahrens eingerichtet wird. Bei dem Datenträger handelt es sich insbesondere um einen nicht-transienten Datenträger, beispielsweise eine CD-ROM.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein Ausführungsbeispiel eines künstlichen neuronalen Netzes,
- Fig. 2: ein Ausführungsbeispiel eines Convolutional Neural Network (CNN),
- Fig. 3: einen Ablaufplan eines Ausführungsbeispiels des erfindungsgemäßen Verfahrens,
- Fig. 4: eine funktionale Prinzipskizze einer erfindungsgemäßen Auswertungseinrichtung, und
- Fig. 5: eine erfindungsgemäße Röntgeneinrichtung.

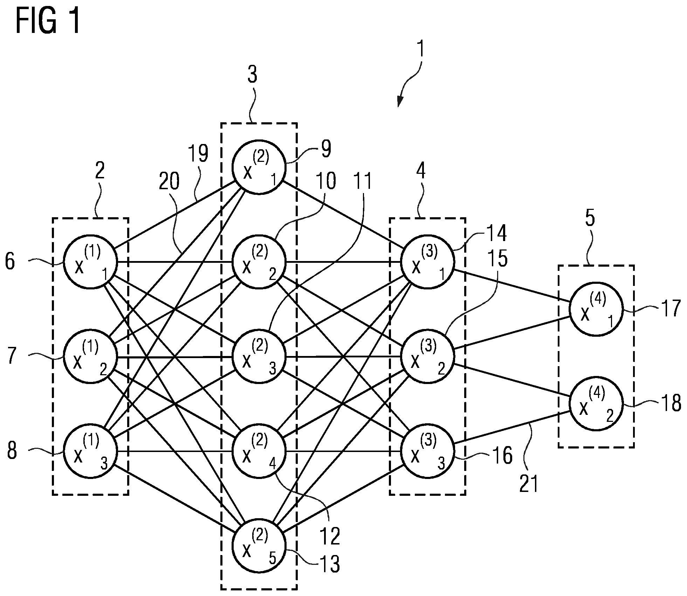

Fig. 1 zeigt ein Ausführungsbeispiel eines künstlichen neuronalen Netzes 1. Englische Ausdrücke für das künstliche neuronale Netz 1 sind "artificial neural network", "neural network", "artificial neural net" oder "neural net".

Das künstliche neuronale Netzwerk 1 umfasst Knoten 6 bis 18 (nodes) und Kanten 19 bis 21 (edges), wobei jede Kante 19 bis 21 eine gerichtete Verbindung von einem ersten Knoten 6 bis 18 zu einem zweiten Knoten 6 bis 18 ist. Im Allgemeinen sind der erste Knoten 6 bis 18 und der zweite Knoten 6 bis 18 unterschiedliche Knoten 6 bis 18, es ist jedoch auch denkbar, dass der erste Knoten 6 bis 18 und der zweite Knoten 6 bis 18 identisch sind. Beispielsweise ist in Fig. 1 die Kante 19 eine gerichtete Verbindung von dem Knoten 6 zu dem Knoten 9 und die Kante 21 ist eine gerichtete Verbindung von dem Knoten 16 zu dem Knoten 18. Eine Kante 19 bis 21 von einem ersten Knoten 6 bis 18 zu einem zweiten Knoten 6 bis 18 wird als eingehende Kante ("ingoing edge") für den zweiten Knoten 6 bis 18 und als ausgehende Kante ("outgoing edge") für den ersten Knoten 6 bis 18 bezeichnet.

In diesem Ausführungsbeispiel können die Knoten 6 bis 18 des künstlichen neuronalen Netzes 1 in Schichten 2 bis 5 (layers) angeordnet werden, wobei die Schichten eine intrinsische Ordnung aufweisen können, die durch die Kanten 19 bis 21 zwischen den Knoten 6 bis 18 eingeführt wird. Insbesondere können Kanten 19 bis 21 nur zwischen benachbarten Schichten von Knoten 6 bis 18 vorgesehen sein. Im dargestellten Ausführungsbeispiel existiert eine Eingabeschicht 2, die lediglich die Knoten 6, 7, 8 aufweist, jeweils ohne eingehende Kante. Die Ausgangsschicht 5 umfasst nur die Knoten 17, 18, jeweils ohne ausgehende Kanten, wobei ferner versteckte Schichten 3 und 4 zwischen der Eingangsschicht 2 und der Ausgangsschicht 5 liegen. Im allgemeinen Fall kann die Zahl der versteckten Schichten 3, 4 beliebig gewählt werden. Die Zahl der Knoten 6, 7, 8 der Eingangsschicht 2 entspricht üblicherweise der Zahl der Eingabewerte in das neuronale Netzwerk 1, und die Zahl der Knoten 17, 18 in der Ausgangsschicht 5 entspricht üblicherweise der Zahl der Ausgabewerte des neuronalen Netzwerks 1.

Insbesondere kann eine (reale) Zahl den Knoten 6 bis 18 des neuronalen Netzwerks 1 zugeordnet werden. Dabei bezeichnet x⁽ⁿ⁾ᵢ den Wert des i-ten Knotens 6 bis 18 der n-ten Schicht 2 bis 5. Die Werte der Knoten 6, 7, 8 der Eingabeschicht 2 sind äquivalent zu den Eingabewerten des neuronalen Netzwerks 1, während die Werte der Knoten 17, 18 der Ausgangsschicht 5 äquivalent zu den Ausgabewerten des neuronalen Netzwerks 1 sind. Darüber hinaus kann jeder Kante 19, 20, 21 ein Gewicht in Form einer realen Zahl zugeordnet sein. Insbesondere ist das Gewicht eine reale Zahl im Intervall [-1, 1] oder im Intervall [0, 1,]. Dabei bezeichnet w^{(m,n)}_{i,j} das Gewicht der Kante zwischen den i-ten Knoten 6 bis 18 der m-ten Schicht 2 bis 5 und den j-ten Knoten 6 bis 18 der n-ten Schicht 2 bis 5. Ferner wird die Abkürzung ${w}_{i , j}^{\left(n\right)}$ für das Gewicht ${w}_{i , j}^{\left(n,n+1\right)}$ definiert.

Um Ausgangswerte des neuronalen Netzes 1 zu berechnen, werden die Eingangswerte durch das neuronale Netz 1 propagiert. Insbesondere können die Werte der Knoten 6 bis 18 des (n+1)-ten Schicht 2 bis 5 basierend auf den Werten der Knoten 6 bis 18 der n-ten Schicht 2 bis 5 berechnet werden durch ${x}_{j}^{\left(n+1\right)} = f \left({\sum }_{i} {x}_{i}^{\left(n\right)} ⋅ {w}_{i , j}^{\left(n\right)}\right) .$

Dabei ist f eine Transferfunktion, die auch als Aktivierungsfunktion bezeichnet werden kann. Bekannte Transferfunktionen sind Stufenfunktionen, Sigmoidfunktionen (beispielsweise die logistische Funktion, die verallgemeinerte logistische Funktion, der Tangens hyperbolicus, der Arkustangens, die Fehlerfunktion, die Smoothstep-Funktion) oder Gleichrichterfunktionen (Rectifier). Die Transferfunktion wird im Wesentlichen für Normierungszwecke verwendet.

Insbesondere werden die Werte schichtweise durch das neuronale Netz 1 propagiert, wobei Werte der Eingangsschicht 2 durch die Eingangsdaten des neuronalen Netzes 1 gegeben sind. Werte der ersten versteckten Schicht 3 können basierend auf den Werten der Eingangsschicht 2 des neuronalen Netzes 1 berechnet werden, Werte der zweiten versteckten Schicht 4 können basierend auf den Werten in der ersten versteckten Schicht 3 berechnet werden usw.

Um die Werte ${w}_{i , j}^{\left(n\right)}$ für die Kanten 19 bis 21 festlegen zu können, muss das neuronale Netz 1 unter Verwendung von Trainingsdaten trainiert werden. Insbesondere umfassen Trainingsdaten Trainingseingangsdaten und Trainingsausgangsdaten, die im Folgenden als tᵢ bezeichnet werden. Für einen Trainingsschritt wird das neuronale Netzwerk 1 auf die Trainingseingangsdaten angewendet, um berechnete Ausgangsdaten zu ermitteln. Insbesondere umfassen die Trainingsausgangsdaten und die berechneten Ausgangsdaten eine Zahl von Werten, wobei sich die Zahl als die Zahl der Knoten 17, 18 der Ausgangsschicht 5 bestimmt.

Insbesondere wird ein Vergleich zwischen den berechneten Ausgangsdaten und den Trainingsausgangsdaten verwendet, um die Gewichte innerhalb des neuronalen Netzes 1 rekursiv anzupassen (Rückpropagierungsalgorithmus - "back propagation algorithm"). Insbesondere können die Gewichte entsprechend $w {′}_{i , j}^{\left(n\right)} = {w}_{i , j}^{\left(n\right)} - γ ⋅ {δ}_{j}^{\left(n\right)} ⋅ {x}_{i}^{\left(n\right)}$ geändert werden, wobei γ eine Lernrate ist und die Zahlen ${δ}_{j}^{\left(n\right)}$ rekursiv berechnet werden können als ${δ}_{j}^{\left(n\right)} = \left({\sum }_{k} {δ}_{k}^{\left(n+1\right)} ⋅ {w}_{j , k}^{\left(n+1\right)}\right) ⋅ f ′ \left({\sum }_{i} {x}_{i}^{\left(n\right)} ⋅ {w}_{i , j}^{\left(n\right)}\right)$ basierend auf ${δ}_{j}^{\left(n+1\right)}$, wenn die (n+1)-te Schicht nicht die Ausgangsschicht 5 ist, und ${δ}_{j}^{\left(n\right)} = \left({x}_{j}^{\left(n+1\right)}-{t}_{j}^{\left(n+1\right)}\right) ⋅ f ′ \left({\sum }_{i} {x}_{i}^{\left(n\right)} ⋅ {w}_{i , j}^{\left(n\right)}\right)$ falls die (n+1)-te Schicht die Ausgangsschicht 5 ist, wobei f' die erste Ableitung der Aktivierungsfunktion ist und ${t}_{j}^{\left(n+1\right)}$ der Vergleichstrainingswert für den j-ten Knoten 17, 18 der Ausgangsschicht 5 ist.

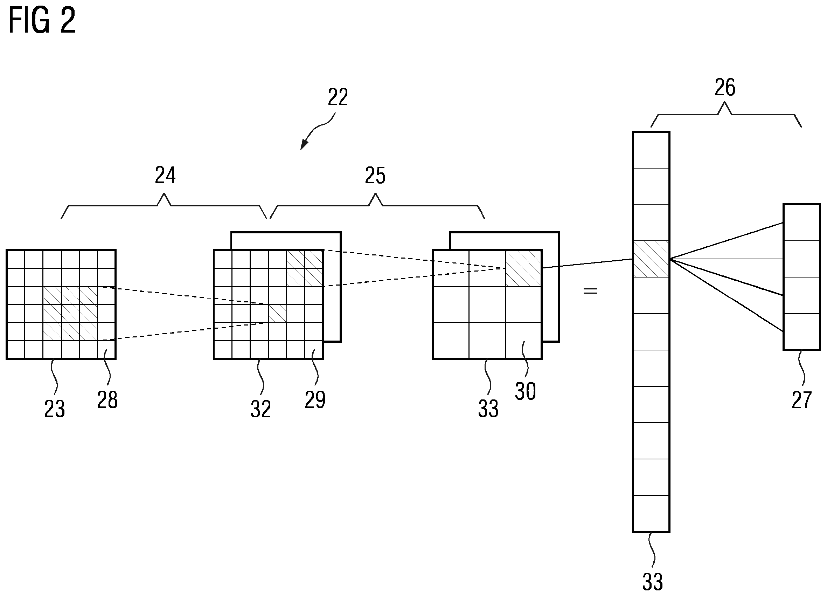

Im Folgenden wird im Hinblick auf Fig. 2 auch ein Beispiel für ein Convolutional Neural Network (CNN) gegeben. Dabei ist zu beachten, dass der Ausdruck "Schicht" ("layer") dort oft auf zwei unterschiedliche Arten gelesen wird. Auf der einen Seite verweist der Ausdruck "Schicht" auf den Satz von Knoten, der mit anderen derartigen Gruppen von Knoten über eingehende und/oder ausgehende Kanten verbunden ist. Auf der anderen Seite wird der Ausdruck "Schicht" als zwei Gruppen von Knoten, die durch eine bestimmte Struktur von Kanten verbunden sind (z.B. Faltungsschicht, Poolingschicht, vollständig verbundene Schicht) verstanden, so dass jede Gruppe von Knoten zwei solchen "Schichten" zugeordnet ist. Die erste Art von Schichten wird zur Unterscheidung als Knotenschichten, die zweite Art (so nicht anderweitig durch den Namen klar) als Verbindungsschichten bezeichnet.

Fig. 2 zeigt ein Ausführungsbeispiel eines Convolutional Neural Network 22. In dem dargestellten Ausführungsbeispiel umfasst das Convolutional Neural Network 22 eine Eingangsknotenschicht 23, eine Faltungsschicht 24 (Convolutional Layer), eine Pooling-Schicht 25, eine vollständig verbundene Schicht 26 und eine Ausgangsknotenschicht 27 sowie versteckte Knotenschichten 32, 33. In alternativen Ausgestaltungen kann das Convolutional Neural Network 22 mehrere Faltungsschichten 24, mehrere Pooling-Schichten 25 und mehrere vollständig verbundene Schichten 26, genau wie andere Arten von Schichten, enthalten. Die Reihenfolge der Schichten kann beliebig gewählt werden, wobei üblicherweise vollständig verbundene Schichten 26 die letzten Schichten vor der Ausgangsschicht 27 bilden.

Insbesondere können innerhalb eines Convolutional Neural Network 22 die Knoten 28 bis 30 einer der Knotenschichten 23, 32 und 33 als in einer d-dimensionalen Matrix oder als d-dimensionales Bild angeordnet verstanden werden. Insbesondere kann im zweidimensionalen Fall der Wert eines Knotens 28 bis 30 mit den Indizes i, j in der n-ten Knotenschicht 23, 32, 33 als x⁽ⁿ⁾[i,j] bezeichnet werden. Es ist darauf hinzuweisen, dass die Anordnung der Knoten 28 bis 30 einer Knotenschicht 23, 32, 33 keinerlei Auswirkung auf die Berechnungen innerhalb des Convolutional Neural Network 22 als solches hat, da diese Auswirkungen ausschließlich durch die Struktur und die Gewichte der Kanten gegeben sind.

Eine Faltungsschicht 24 ist insbesondere dadurch ausgezeichnet, dass die Struktur und die Gewichte der eingehenden Kanten eine Faltungsoperation basierend auf einer bestimmten Zahl von Kernen bildet. Insbesondere können die Struktur und die Gewichte der eingehenden Kanten so gewählt werden, dass die Werte ${x}_{k}^{\left(n\right)}$ der Knoten 29 der hinteren Knotenschicht 32 als eine Faltung x⁽ⁿ⁾=K * x⁽ⁿ⁻¹⁾ basierend auf den Werten x⁽ⁿ⁻¹⁾ der Knoten 28 der vorderen Knotenschicht 23 ermittelt werden, wobei die Faltung * im zweidimensionalen Fall definiert werden kann als ${x}^{\left(n\right)} \left[i, j\right] = \left(K*{x}^{\left(n-1\right)}\right) \left[i, j\right] = {\sum }_{i ′} {\sum }_{j ′} K \left[i′,j′\right] ⋅ {x}^{\left(n-1\right)} \left[i-i′,j-j′\right] .$

Darin ist der Kern Kₖ eine d-dimensionale Matrix, in diesem Ausführungsbeispiel eine zweidimensionale Matrix, die üblicherweise klein im Vergleich zur Zahl der Knoten 28, 29 ist, beispielsweise eine 3x3-Matrix oder eine 5x5-Matrix. Insbesondere impliziert dies, dass die Gewichte der Kanten nicht unabhängig sind, sondern so gewählt sind, dass sie obige Faltungsgleichung erzeugen.

Im Allgemeinen nutzen Convolutional Neural Networks 22 Knotenschichten 23, 32, 33 mit einer Mehrzahl von Kanälen, insbesondere aufgrund der Nutzung einer Mehrzahl von Kernen in Faltungsschichten 24. In solchen Fällen können die Knotenschichten als eine (d+1)-dimensionale Matrix verstanden werden, wobei die erste Dimension die Kanäle indiziert. Die Wirkung einer Faltungsschicht 24 ist dann in einem zweidimensionalen Beispiel definiert als ${{x}^{\left(n\right)}}_{b} \left[i, j\right] = {\sum }_{a} \left({K}_{a , b}*{{x}^{\left(n-1\right)}}_{a}\right) \left[i, j\right] = {\sum }_{a} {\sum }_{i ′} {\sum }_{j ′} {K}_{a , b} \left[i′,j′\right] ⋅ {x}^{\left(n-1\right)} \left[i′-i′,j-j′\right] a ,$ **worin** *x*^{(*n*-1)}*ₐ* dem a-ten Kanal der vorderen Knotenschicht 23, *x*^{(*n-*1)}*_{b}* dem b-ten Kanal der hinteren Knotenschicht 21 und *K_{a,b}* einem der Kerne entspricht. Wenn eine Faltungsschicht 24 auf eine vordere Knotenschicht 23 mit A Kanälen wirkt und eine Knotenschicht 32 mit B Kanälen ausgibt, existieren A · B unabhängige d-dimensionale Kerne *K_{a,b}.*

Im Allgemeinen werden in Convolutional Neural Networks 22 Aktivierungsfunktionen verwendet. In diesem Ausführungsbeispiel werden ReLU (Akronym für "Rectified Linear Units") verwendet, wobei R(z) = max (0,z), so dass die Wirkung der Faltungsschicht 24 in dem zweidimensionalen Beispiel geschrieben werden kann als ${x}^{\left(n\right)} \left[i, j\right] b = R \left({\sum }_{a} \left({K}_{a , b}*{{x}^{\left(n-1\right)}}_{a}\right) \left[i, j\right]\right) = R \left({\sum }_{a} {\sum }_{i ′} {\sum }_{j ′} {K}_{a , b} \left[i′,j′\right] ⋅ {x}^{\left(n-1\right)} \left[i′-i′,j-j′\right] a\right) .$

Es ist auch möglich, andere Aktivierungsfunktionen zu verwenden, beispielsweise ELU (Akronym für "Exponential Linear Unit"), LeakyReLU, Sigmoidfunktionen, Tanh oder Softmax.

Im dargestellten Ausführungsbeispiel umfasst die Eingangsschicht 23 sechsunddreißig Knoten 28, die in einer zweidimensionalen 6x6-Matrix angeordnet sind. Die erste versteckte Knotenschicht 32 umfasst zweiundsiebzig Knoten 29, die als zwei zweidimensionale 6x6-Matrizen angeordnet sind, wobei jede der zwei Matrizen das Ergebnis einer Faltung der Werte der Eingangsschicht 23 mit einem 3x3-Kern in der Faltungsschicht 24 ist. Auf gleiche Weise können die Knoten 29 der ersten versteckten Knotenschicht 32 als in einer dreidimensionalen 2x6x6-Matrix angeordnet, wobei die erste Dimension der Kanaldimension entspricht.

Der Vorteil der Nutzung von Faltungsschichten 24 ist, dass die räumlich lokale Korrelation der Eingangsdaten ausgenutzt werden kann, indem ein lokales Verbindungsmuster zwischen Knoten benachbarter Schichten geschaffen wird, insbesondere dadurch, dass jeder Knoten nur zu einem kleinen Bereich der Knoten der vorangehenden Schicht Verbindungen aufweist.

Eine Pooling-Schicht 25 ist eine Verbindungschicht zwischen einer vorderen Knotenschicht 32 mit Knotenwerten x⁽ⁿ⁻¹⁾ und einer hinteren Knotenschicht 33 mit Knotenwerten x⁽ⁿ⁾. Eine Poolingschicht 25 kann durch die Struktur und die Gewichte der Kanten und die Aktivierungsfunktion charakterisiert werden, wobei die Aktivierungsfunktion eine Pooling-Operation basierend auf einer nichtlinearen Pooling-Funktion f durchführt. Beispielsweise können im zweidimensionalen Fall die Werte x⁽ⁿ⁾ der Knoten 30 der hinteren Knotenschicht 33 basierend auf den Werten x⁽ⁿ⁺¹⁾ der Knoten 29 der vorderen Knotenschicht 32 als ${x}^{\left(n\right)} \left[i, j\right] b = f \left({x}^{\left(n-1\right)}\left[{id}_{1}, {jd}_{2}\right] b,…,{x}^{\left(n-1\right)}\left[\left(i+1\right){d}_{1}-1,\left(j+1\right){d}_{2}-1\right] b\right)$ berechnet werden. In anderen Worten kann durch die Verwendung einer Pooling-Schicht 25 die Zahl der Knoten 29, 30 reduziert werden, indem eine Anzahl von d₁ • d₂ benachbarter Knoten 29 in der vorderen Knotenschicht 32 durch einen einzelnen Knoten 30 in der hinteren Knotenschicht 33 ersetzt wird, der als eine Funktion der Werte der genannten Anzahl benachbarter Knoten 29 berechnet wird. Insbesondere kann die Pooling-Funktion f eine Maximumsfunktion, eine Durchschnittsbildung oder die L2-Norm sein. Insbesondere können für eine Pooling-Schicht 25 die Gewichte der eingehenden Kanten festgelegt sein und nicht durch Training modifiziert sein.

Der Vorteil der Verwendung einer Pooling-Schicht 25 ist, dass die Zahl der Knoten 29, 30 und die Zahl der Parameter reduziert wird. Dies führt zu einer Reduktion der notwendigen Berechnungsmenge innerhalb des Convolutional Neural Network 22 und somit zu einer Steuerung der Überanpassung.

Im dargestellten Ausführungsbeispiel handelt es sich bei der Pooling-Schicht 25 um eine Max-Pooling-Schicht, in der vier benachbarte Knoten mit nur einem einzigen Knoten ersetzt werden, dessen Wert durch das Maximum der Werte der vier benachbarten Knoten gebildet wird. Das Max-Pooling wird auf jede d-dimensionale Matrix der vorherigen Schicht angewendet; in diesem Ausführungsbeispiel wird das Max-Pooling auf jede der zwei zweidimensionalen Matrizen angewendet, so dass sich die Zahl der Knoten von zweiundsiebzig auf achtzehn reduziert.

Im Allgemeinen sind die letzten Schichten eines Convolutional Neural Network 22 vollständig verbundene Schichten 26. eine vollständig verbundene Schicht 26 ist eine Verbindungschicht zwischen einer vorderen Knotenschicht 33 und einer hinteren Knotenschicht 27. Eine vollständig verbundene Schicht 26 zeichnet sich dadurch aus, dass eine Mehrzahl, insbesondere alle, Kanten zwischen den Knoten 30 der vorderen Knotenschicht 33 und den Knoten 31 der hinteren Knotenschicht 27 vorhanden sind, wobei das Gewicht jeder der Kanten individuell angepasst werden kann.

In diesem Ausführungsbeispiel werden die Knoten 30 der vorderen Knotenschicht 33 und der hinteren Knotenschicht 27 beide als zweidimensionale Matrizen und zusätzlich als nichtzusammenhängende Knoten (dargestellt als eine Reihe von Knoten, wobei die Zahl der Knoten für eine bessere Darstellbarkeit reduziert wurde) gezeigt. Diese Operation wird auch als "Flattening" bezeichnet. In diesem Ausführungsbeispiel ist die Zahl der Knoten 31 in der hinteren Knotenschicht 27 der vollständig verbundenen Schicht 26 kleiner als die Anzahl der Knoten 30 in der vorderen Knotenschicht 33 der vollständig verbundenen Schicht 26. In alternativen Ausführungsformen kann die Zahl der Knoten 31 gleich oder größer sein.

Darüber hinaus wird in diesem Ausführungsbeispiel die Softmax-Funktion in der vollständig verbundenen Schicht 26 angewendet. Durch Anwendung der Softmax-Funktion ist die Summe der Werte aller Knoten 31 der Ausgangsschicht 27 eins und alle Werte aller Knoten 31 der Ausgangsschicht sind reale Zahlen zwischen 0 und 1. Wenn das Convolutional Neural Network 22 zur Klassifizierung von Eingangsdaten genutzt wird, können insbesondere die Werte der Ausgangsschicht 27 als Wahrscheinlichkeit dafür interpretiert werden, dass die Eingangsdaten in eine der unterschiedlichen Klassen fallen.

Convolutional Neural Networks 22 können insbesondere basierend auf dem Rückpropagierungsalgorithmus trainiert werden. Um eine Überanpassung (overfitting) zu vermeiden, können Verfahren der Regularisierung eingesetzt werden, beispielsweise Dropout einzelner Knoten 28 bis 31, stochastisches Pooling, Nutzen von künstlichen Daten, Gewichtszerfall basierend auf der L1- oder der L2-Norm oder Maximalnorm-Einschränkungen.

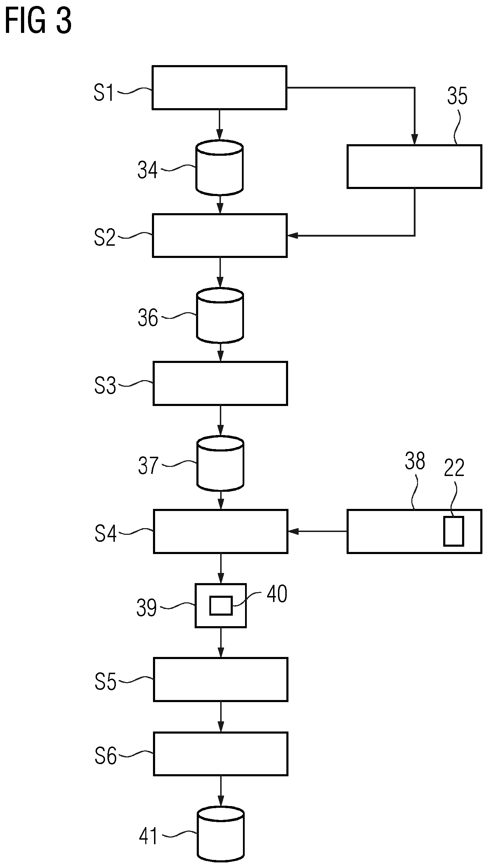

Im Folgenden wird nun ein Ausführungsbeispiel des erfindungsgemäßen Verfahrens mittels des Ablaufplans der Fig. 3 erläutert. Darin werden in einem Schritt S1 im Rahmen eines Untersuchungsvorgangs mit einer Röntgeneinrichtung Projektionsbilder 34 eines Untersuchungsobjekts in unterschiedlichen Aufnahmegeometrien aufgenommen. Hierbei wird eine Aufnahmeanordnung mit einem Röntgenstrahler und einem Röntgendetektor verwendet, wobei sich der Röntgenstrahler entlang einer Aufnahmetrajektorie bewegt. Die Aufnahmegeometrien jedes zweidimensionalen Projektionsbilds 34 werden durch Geometrieparameter beschrieben, wobei ein entsprechender Geometrieparametersatz 35, der eine bestmögliche Abschätzung darstellt, ebenso von der Röntgeneinrichtung bereitgestellt wird, beispielsweise auf Basis der geplanten Aufnahmetrajektorie und bekannter Eigenschaften der Aufnahmeanordnung und sonstigen bewegten und/oder bewegenden Komponenten der Röntgeneinrichtung. Die Aufnahmetrajektorie kann plan sein, also in einer einzigen Ebene liegen, aber auch nicht-plan, beispielsweise eine Spiraltrajektorie oder eine frei in drei Dimensionen bestimmte Trajektorie.

In einem Schritt S2 wird aus den Projektionsbildern 34 unter Verwendung der Geometrieparameter des Geometrieparametersatzes 35 ein vorläufiger Computertomographiedatensatz 36 rekonstruiert. Dieser kann, wenn wenigstens ein Geometrieparameter des Geometrieparametersatzes 35 von dem tatsächlichen Wert abweicht, wie grundsätzlich bekannt, Artefakte aufweisen. In diesem Fall ist es gewünscht, die durch den Geometrieparametersatz 35 beschriebene Justage zu verbessern.

Hierzu wird in einem Schritt S3 ein Eingangsdatensatz 37 zusammengestellt. Während grundsätzlich der Eingangsdatensatz 37 den gesamten vorläufigen Computertomographiedatensatz 36 enthalten kann, wird dieser im vorliegenden Ausführungsbeispiel mittels einer Analysefunktion analysiert, um Teildatensätze zu bestimmen, die nicht den gesamten vorläufigen Computertomographiedatensatz 36 abdecken. Hierzu schließt die Analysefunktion zunächst Anteile ohne Bildinformation, insbesondere Luft zeigende Bereiche, aus. Ferner werden Kanten ab einer bestimmten Kantenhöhe und/oder Länge detektiert. Die Teildatensätze werden dann so bestimmt, dass sie diese Kanten zeigen und den Rekonstruktionsbereich (ohne die ausgeschlossenen Anteile) möglichst vollständig und gleichmäßig abdecken. Optional kann die Ortsauflösung in wenigstens einem Teil der Teildatensätze reduziert werden, um die Datenmenge weiter zu reduzieren. Zu jedem Teildatensatz wird zudem eine Ortsangabe als Teil des Eingangsdatensatzes 37 bestimmt, die die Lage im Rekonstruktionsbereich und die relative Lage der Teildatensätze zueinander beschreibt.

Auf den Eingangsdatensatz 37 wird in einem Schritt S4 eine trainierte Auswertungsfunktion 38 angewendet, die einen Ausgangsdatensatz 39 mit Korrekturinformation 40 liefert. Die Korrekturinformation 40 beschreibt für jeden Geometrieparameter des Geometrieparametersatzes 35 eine maximale Abweichung von dem zur Rekonstruktion des vorläufigen Computertomographiedatensatzes 36 verwendeten Wert, optional auch eine minimale Abweichung hiervon. Um dies zu erreichen, wurde die trainierte Auswertungsfunktion 38, welche auch ein CNN 22 umfasst, mit Trainingsdatensätzen trainiert, die durch gezielte Abweichungen von für Vorgabe-Projektionsbilder hinreichend genau bekannten Vorgabe-Geometrieparametern und Rekonstruktion entsprechender vorläufiger Trainings-Computertomographiedatensätze ermittelt wurden. Die gewollte Abweichung definiert dort die Grundwahrheit.

In der Korrekturinformation 40 können Abweichungen auch Null betragen, wenn Abweichungen in dem entsprechenden Geometrieparameter nicht für die Artefakte in dem vorläufigen Computertomographiedatensatz 36 verantwortlich sein können. Ferner sei angemerkt, dass die Abweichungen auch im Allgemeinen beispielsweise als Vielfache einer Detektorpixelgröße ermittelt werden können, insbesondere dann, wenn auch eine aktuell für die Aufnahme der Projektionsbilder 34 verwendete Vergrößerung bekannt ist.

In einem Schritt S5 werden anzuwendende Korrekturwerte aus der Korrekturinformation 40 bestimmt. Werden maximale und minimale Abweichungen bestimmt und liegen diese, beschrieben durch eine Bestimmtheitsbedingung, nahe genug beieinander, liegt also ihr Abstand unterhalb eines Bestimmtheitsschwellwerts, können konkrete anzuwendende Korrekturwerte bereits unmittelbar aus der Korrekturinformation 40 folgen, beispielsweise durch Mittelwertbildung. Grundsätzlich vorgesehen ist es jedoch, einen Ermittlungsvorgang zur Bestimmung der konkreten Korrekturwerte anzuwenden, in dem eine Optimierung auf Grundlage einer Kostenfunktion erfolgt, die im 3D-Radonraum bestehende Redundanzen verwendet. Für den Ermittlungsvorgang werden zumindest die maximalen Abweichungen, optional auch die minimalen Abweichungen, als Justageparameter verwendet, die ansonsten nur schwer oder - gerade bei hochaufgelösten Aufnahmen und nicht-planen Aufnahmetrajektorien - gar nicht bzw. nur mit äußerst großer Erfahrung des Benutzers passend gewählt werden könnten.

Wird eine Bestimmtheitsbedingung verwendet, kann ein Benutzer angefragt werden, ob er den Ermittlungsvorgang bei Erfüllung überspringen möchte oder ob er diesen zur Sicherheit doch durchführen will.

In einem Schritt S6 werden dann die Geometrieparameter des Geometrieparametersatzes 35 um die konkreten, anzuwendenden Korrekturwerte korrigiert und es wird ein korrigierter, artefaktreduzierter bzw. sogar artefaktbefreiter Computertomographiedatensatz 41 rekonstruiert und ausgegeben und/oder gespeichert.

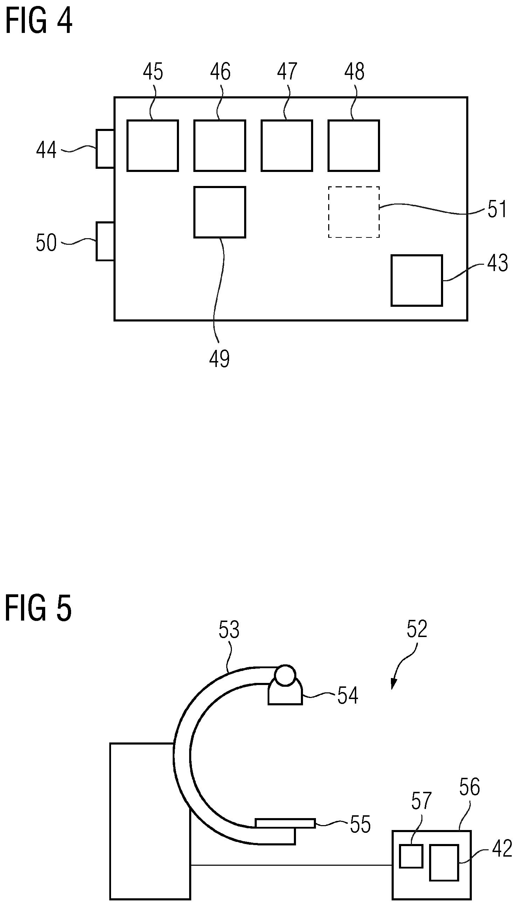

Fig. 4 zeigt den funktionalen Aufbau einer erfindungsgemäßen Auswertungseinrichtung 42, die zur Durchführung eines erfindungsgemäßen Verfahrens ausgebildet ist. Die Auswertungseinrichtung 42 umfasst zunächst ein Speichermittel 43, in dem Daten und Funktionen gespeichert werden können. Wenigstens ein Prozessor ist der Übersichtlichkeit halber nicht gezeigt.

Mittels einer Schnittstelle 44 werden vorliegend die Projektionsbilder 34 und der Geometrieparametersatz 35 entgegengenommen. Eine Rekonstruktionseinheit 45 dient zur Ermittlung des vorläufigen Computertomographiedatensatzes 36 gemäß Schritt S2, wobei eine Zusammenstellungseinheit 46 den Eingangsdatensatz 37 gemäß Schritt S3 zusammenstellt. In einer Auswertungseinheit 47 wird die trainierte Auswertungsfunktion 38 gemäß dem Schritt S4 auf den Eingangsdatensatz 37 angewendet.

Zur Ermittlung der konkreten Korrekturwerte gemäß Schritt S5 ist eine Ermittlungseinheit 48 vorgesehen, die auch zur Durchführung des Ermittlungsvorgangs ausgebildet ist. Mittels einer Korrektureinheit 49 kann dann, unter erneutem Rückgriff auf die Rekonstruktionseinheit 45, der korrigierte Computertomographiedatensatz 41 gemäß Schritt S6 ermittelt werden und über eine Schnittstelle 50 bereitgestellt werden.

Optional kann die Auswertungseinrichtung 42 auch eine Trainingseinheit 51 aufweisen, um die Auswertungsfunktion 38 zu trainieren und bereitzustellen.

Fig. 5 zeigt eine Prinzipskizze einer erfindungsgemäßen Röntgeneinrichtung 52, die vorliegend rein beispielhaft mit einem C-Bogen 53 gezeigt ist, an dem sich gegenüberliegend ein Röntgenstrahler 54 und ein Röntgendetektor 55 angeordnet sind. Diese bilden die Aufnahmeanordnung, die mittels der Bewegungsfreiheitsgrade des C-Bogens 53 und ggf. auch der einzelnen Komponenten auf die verschiedenen Aufnahmegeometrien eingestellt werden kann. Alternativ kann sich bei der Röntgeneinrichtung 52 auch um eine klassische Computertomographieeinrichtung mit einer Gantry, eine Tomosyntheseeinrichtung oder dergleichen handeln und/oder es können Roboterarme genutzt werden.

Der Betrieb der Röntgeneinrichtung 52 wird von einer Steuereinrichtung 56 gesteuert, die eine Auswertungseinrichtung 42 umfasst oder als solche ausgebildet ist. Zudem kann die Steuereinrichtung 56 eine Aufnahmeeinheit 57 zur Steuerung des Aufnahmebetriebs, insbesondere auch der Aufnahme der Projektionsbilder 34 im Schritt S1, aufweisen.

*Unabhängig vom grammatikalischen Geschlecht eines bestimmten Begriffes sind Personen mit männlicher, weiblicher oder anderer Geschlechteridentität mit umfasst.*

## Patentansprüche

1. Computerimplementiertes Verfahren zur Ermittlung einer Korrekturinformation (40) für einen vorläufigen Computertomographiedatensatz (36), der aus einer Mehrzahl von Projektionsbildern (34) rekonstruiert ist, die in unterschiedlichen, durch Geometrieparameter beschriebenen Aufnahmegeometrien aufgenommen wurden,
**dadurch gekennzeichnet, dass** eine trainierte Auswertungsfunktion (38) auf einen Eingangsdatensatz (37), der wenigstens einen Teil der Bilddaten des vorläufigen Computertomographiedatensatzes (46) umfasst, angewendet wird, um einen eine Korrekturinformation (40) umfassenden Ausgangsdatensatz (39) zu ermitteln, wobei die Korrekturinformation (40) für wenigstens einen Geometrieparameter eine Abweichung von einem zur Rekonstruktion des vorläufigen Computertomographiedatensatzes (36) verwendeten Wert beschreibt.

2. Verfahren nach Anspruch 1, **dadurch gekennzeichnet, dass** die Korrekturinformation (40) wenigstens umfassend eine maximale Abweichung für den wenigstens einen Geometrieparameter ermittelt wird.

3. Verfahren nach Anspruch 2, **dadurch gekennzeichnet, dass** wenigstens die maximale Abweichung als Justageparameter für einen Ermittlungsvorgang zur Ermittlung eines anzuwendenden Korrekturwerts für wenigstens einen des wenigstens einen Geometrieparameters verwendet wird, wonach unter Anwendung der Korrekturwerte ein korrigierter Computertomographiedatensatz (41) rekonstruiert wird.

4. Verfahren nach Anspruch 3, **dadurch gekennzeichnet, dass** in dem Ermittlungsvorgang eine Optimierung auf Grundlage einer Kostenfunktion erfolgt, die im 3D-Radonraum bestehende Redundanzen verwendet.

5. Verfahren nach einem der Ansprüche 2 bis 4, **dadurch gekennzeichnet, dass** zusätzlich zu der maximalen Abweichung auch eine minimale Abweichung für den wenigstens einen Geometrieparameter ermittelt wird.

6. Verfahren nach Anspruch 5, **dadurch gekennzeichnet, dass** zumindest bei Erfüllung einer Bestimmtheitsbedingung, die anzeigt, dass der Abstand zwischen der minimalen Abweichung und der maximalen Abweichung für wenigstens einen, insbesondere alle, des wenigstens einen Geometrieparameters einen Bestimmtheitsschwellwert unterschreitet, aus der maximalen Abweichung und der minimalen Abweichung ein anzuwendender Korrekturwert ermittelt und, insbesondere nach Bestätigung durch einen Benutzer, zur Rekonstruktion des oder eines korrigierten Computertomographiedatensatzes (41) verwendet wird.

7. Verfahren nach einem der vorangehenden Ansprüche, **dadurch gekennzeichnet, dass** der Eingangsdatensatz (37) wenigstens einen Teildatensatz des vorläufigen Computertomographiedatensatzes (36), nicht aber den gesamten Computertomographiedatensatz (36), umfasst, wobei dem Teildatensatz wenigstens eine Ortsangabe im Rekonstruktionsraum zugeordnet ist.

8. Verfahren nach Anspruch 7, **dadurch gekennzeichnet, dass** der wenigstens eine Teildatensatz aus dem vorläufigen Computertomographiedatensatz (36) wenigstens teilweise derart ermittelt wird, dass
- wenigstens eine Kante in den Bilddaten enthalten ist, und/oder
- der Rekonstruktionsbereich und/oder Kanten in den Bilddaten im Rekonstruktionsbereich durch die mehreren Teildatensätze, insbesondere gleichmäßig, abgedeckt sind, und/oder
- Bereiche mit geringwertiger Bildinformation und/oder ohne Bildinformation, insbesondere Luft zeigende Bereiche, ausgeschlossen sind.

9. Verfahren nach Anspruch 7 oder 8, **dadurch gekennzeichnet, dass** für wenigstens einen des wenigstens einen Teildatensatzes dessen räumliche Auflösung im Vergleich zu dem vorläufigen Computertomographiedatensatz (36) reduziert wird.

10. Verfahren nach einem der vorangehenden Ansprüche, **dadurch gekennzeichnet, dass** zur Bereitstellung der trainierten Auswertungsfunktion (38)
- wenigstens ein Satz von Vorgabe-Projektionsbildern mit zugehörigen, zumindest im Wesentlichen korrekten Vorgabe-Geometrieparametern bereitgestellt wird,
- zur Bildung von Trainingsdatensätzen
* wenigstens ein Vorgabe-Geometrieparameter zur Definition einer eine Grundwahrheit bildenden Abweichung variiert wird, und
* zur Ermittlung eines Trainings-Eingangsdatensatzes ein Trainings-Computertomographiedatensatz aus den Vorgabe-Projektionsbildern unter Nutzung des variierten Vorgabe-Geometrieparametersatzes rekonstruiert wird,
- die Auswertungsfunktion (38) mit den Trainingsdatensätzen trainiert wird, und
- die trainierte Auswertungsfunktion (38) bereitgestellt wird.

11. Verfahren nach einem der vorangehenden Ansprüche, **dadurch gekennzeichnet, dass** die trainierte Auswertungsfunktion (38) ein CNN (22) umfasst.

12. Auswertungseinrichtung (42) zur Ermittlung einer Korrekturinformation (40) für einen vorläufigen Computertomographiedatensatz (36), der aus einer Mehrzahl von Projektionsbildern (34) rekonstruiert ist, die in unterschiedlichen, durch Geometrieparameter beschriebenen Aufnahmegeometrien aufgenommen wurden, aufweisend eine Auswertungseinheit (47) zur Anwendung einer trainierten Auswertungsfunktion (38) auf einen Eingangsdatensatz (37), der wenigstens einen Teil der Bilddaten des vorläufigen Computertomographiedatensatzes (36) umfasst, um einen die Korrekturinformation (40) umfassenden Ausgangsdatensatz (39) zu ermitteln, wobei die Korrekturinformation (40) für wenigstens einen Geometrieparameter eine Abweichung von einem zur Rekonstruktion des vorläufigen Computertomographiedatensatzes (36) verwendeten Wert beschreibt.

13. Röntgeneinrichtung (52), aufweisend eine als eine Auswertungseinrichtung (42) nach Anspruch 12 ausgebildete oder eine solche umfassende Steuereinrichtung (56).

14. Computerprogramm, welches, wenn es auf einer Auswertungseinrichtung (42) ausgeführt wird, die Schritte eines Verfahrens nach einem der Ansprüche 1 bis 11 durchführt.

15. Elektronisch lesbarer Datenträger, auf dem ein Computerprogramm nach Anspruch 14 gespeichert ist.
